Europäisches Patentamt

European Patent Office

Office européen des brevets

(11) Veröffentlichungsnummer: **0 140 044**
**A2**

(12) **EUROPÄISCHE PATENTANMELDUNG**

(21) Anmeldenummer: **84110532.3**

(22) Anmeldetag: **05.09.84**

(51) Int. Cl.⁴: **C 12 H 1/14**

(30) Priorität: **15.09.83 DE 3333278**

(43) Veröffentlichungstag der Anmeldung:
**08.05.85 Patentblatt 85/19**

(84) Benannte Vertragsstaaten:
**AT CH DE FR IT LI**

(71) Anmelder: **HOECHST AKTIENGESELLSCHAFT**
**Postfach 80 03 20**
**D-6230 Frankfurt am Main 80(DE)**

(72) Erfinder:
**Die Erfinder haben auf ihre Nennung verzichtet**

(54) Verfahren zur Verhinderung der Weinsteinbildung in Getränken.

(57) In bekannten Verfahren zur Verhinderung der Weinstein-bildung in Weinen, Schaumweinen, Traubensäften oder verg-leichbaren Getränken werden beispielsweise Polysaccharide oder Polysaccharidderivate den zu behandelnden Flüssig-keiten zugesetzt. Erfindungsgemäß wird als Polysaccharid-derivat ein wasserlöslicher Carboxyalkylether (z.B. NaCMC) der Cellulose oder Stärke oder eines ihrer wasserlöslichen Salze verwendet, was zu einer guten Weinsteinstabilisierung auch über längere Lagerzeiträume führt.

EP 0 140 044 A2

HOECHST AKTIENGESELLSCHAFT
KALLE Niederlassung der Hoechst AG

83/K059                    - 1 -              4. September 1984
                                             WLK-Dr.I.-wf


Verfahren zur Verhinderung der Weinsteinbildung in Getränken

Die Erfindung betrifft ein Verfahren zur Verhinderung der Weinsteinbildung in Weinen, Schaumweinen und Traubensäften.

Weine, Schaumweine und Traubensäfte enthalten unmittelbar nach ihrer Herstellung Kaliumhydrogentartrat (genannt: Weinstein) in übersättigter Lösung. Der Weinstein fällt normalerweise bei der Lagerung und auch beim Eindicken des Mostes aus. Die Ursachen dafür sind beispielsweise a) eine Vergrößerung der Konzentration der gelösten Ionen durch Volumenverminderung der Flüssigkeit, b) die Bildung von Alkohol bei der Gärung, da der Weinstein in alkoholhaltigen wäßrigen Lösungen schlechter löslich ist als in alkoholfreien, c) der biologische Säurerückgang, da der Weinstein bei verschiedenen pH-Werten ein unterschiedliches Löseverhalten zeigt, und/oder d) eine Temperaturerniedrigung. Diese Ausscheidung von Weinstein kann aber in der Praxis dazu führen, daß der Verbraucher beispielsweise bei Wein die abgeschiedenen Kristalle als "Verschmutzung" oder "Zukkerbildung" ablehnt, sich beim Öffnen einer Sektflasche $CO_2$ an den abgeschiedenen Kristallen entbindet und zum Schäumen führt oder beim Eindicken von Traubensaft eine an sich unerwünschte Belagsbildung z. B. auf den Verdampferflächen auftritt.

Aus dem Stand der Technik sind bereits verschiedene Verfahren zur Verhinderung der Weinsteinbildung in den

genannten Getränken bekannt, die aber alle noch gewisse
Nachteile aufweisen; es wird beispielhaft auf die umfassende Darstellung in "Anwendungsmöglichkeiten von
Membranprozessen bei der Herstellung von Getränken" von
Karl Wucherpfennig, Habilitationsschrift, Geisenheim
(DE) - 1977, gedruckt bei Offset Köhler - Gießen (DE),
Seiten 86 bis 133, verwiesen:

- Abkühlen des Getränkes,

- Zugabe von Polymeren aus der Gruppe der Proteine oder
  Abbauprodukten davon wie Pepton (Mischung aus Peptiden und Aminosäuren als Abbauprodukte von Proteinen),

- Zugabe von Gerbstoffen (mit einem Gehalt an Gerbsäuren wie Tannin) oder Tannin [natürliche Polyphenole,
  die sich z. B. von der Gallussäure (3,4,5-Trihydroxybenzoesäure) ableiten] selbst,

- Zugabe von Metaweinsäure, einem inter- und intramolekularen Ester der Weinsäure [2,3-Dihydroxy-butandisäure(1,4)] oder bestimmten Salzen der Metaweinsäure
  (z. B. Lithiumsalzen), siehe beispielsweise FR-A
  1 159 334, FR-A 1 159 354, FR-A 1 159 367, FR-A
  1 160 787 oder FR-A 1 176 795,

- Zugabe von Polysacchariden oder ihren Derivaten wie
  Pektin (einem Polysaccharid mit Galakturonsäureeinheiten, deren OH-Gruppen teilweise methyliert sind),
  Kapillärsirup (einem Stärkesirup), verkleisterter
  Stärke, Dextrin (Säureabbauprodukt der Stärke) oder
  Gummi arabicum (chemisch etwa mit Pektin vergleichbar),

- Zugabe von anorganischen Oligomeren oder Polymeren wie Kieselsol (einer wäßrigen Lösung von kolloidalem $SiO_2$) oder Natriumpolyphosphat,

- Zugabe von synthetischen Polymeren wie Polyvinylpyrrolidon,

- Veränderung der Ionenkonzentration an $K^+$-Kationen oder Hydrogentartrat-Anionen durch Ausfällung (wie durch $Ca^{2+}$-Ionen, siehe beispielsweise US-A 2 548 594 DE-C 12 16 226 oder DE-C 27 24 423) oder Ionenaustausch,

- Konzentrieren der Inhaltsstoffe durch Umkehrosmose (Abtrennen von Alkohol und Wasser und Anreicherung von u. a. $K^+$-Ionen und Hydrogentartrationen),

- Verringerung der Kationenkonzentration durch Elektrodialyse oder

- Zugabe von Impfkristallen zur Beschleunigung des Kristallisationsbeginns, siehe beispielsweise DE-C 27 24 423.

Diese Verfahren, die teilweise auch tatsächlich gewerbliche Verwertung gefunden haben, weisen aber u. a. noch folgende Nachteile auf: Für das Abkühlen der Getränke werden große Energiemengen benötigt, und es kann außerdem nicht verhindert werden, daß es beim Filtrieren und/oder Lagern noch zur Nachkristallisation kommt; der letztgenannte Nachteil tritt auch bei den anderen Arten der "Zwangsausfällung" des Weinsteins auf, beispielsweise durch die Zugabe von Fremdionen oder Impfkristallen. Die Verfahren der Umkehrosmose oder Elektrodialyse können zwar sehr wirksam sein, sie sind jedoch aufwendig und erfordern zusätzliche Verfahrens- und/oder Fil-

HOECHST AKTIENGESELLSCHAFT
KALLE Niederlassung der Hoechst AG

- 4 -

trationsschritte. Die Zugabe der bisher bekannten und auf diesem Anwendungsgebiet eingesetzten anorganischen oder organischen Polymeren verzögert zwar die Weinsteinbildung mehr oder weniger stark, sie verhindert sie aber nicht in ausreichendem Maße. Durch die Zugabe von Metaweinsäure besteht zwar eine für die kurzzeitige Lagerung der genannten Getränke ausreichende Möglichkeit der Verhinderung der Weinsteinbildung, die Metaweinsäure ist jedoch nicht über längere Zeit stabil und hydrolysiert, so daß ihre Zugabe dann sogar zu dem an sich unerwünschten Effekt einer Erhöhung der Hydrogentartrationenkonzentration führt. Der Einsatz von Ionenaustauschern war über mehrere Jahre zugelassen, ist jedoch inzwischen zumindest im EG-Raum nicht mehr genehmigt, da den üblicherweise aus organischen Harzen bestehenden Austauscherfüllungen gewisse Nachteile wie mikrobiologische Instabilität oder Gefahr der Abgabe von Spuren an toxischen Verbindungen nachgesagt werden; diese Nachteile sind zwar letzlich nicht bewiesen worden, sie haben u. a. jedoch zur Nichtverlängerung der Zulassung geführt.

Aufgabe der vorliegenden Erfindung ist es deshalb, ein Verfahren aufzuzeigen, das in der Praxis ohne größeren apparativen und energetischen Aufwand durchgeführt werden kann und die Weinsteinbildung auch über einen längeren Zeitraum möglichst vollständig verhindert.

Die Erfindung geht aus von dem Verfahren zur Verhinderung der Weinsteinbildung in Weinen, Schaumweinen und Traubensäften durch Zugabe von Polysacchariden oder
Polysaccharidderivaten zu den zu behandelnden Flüssigkeiten. Das erfindungsgemäße Verfahren ist dadurch
gekennzeichnet, daß als Polysaccharidderivat ein wasserlöslicher Carboxyalkylether der Cellulose oder Stärke oder eines ihrer wasserlöslichen Salze eingesetzt
wird.

Es ist zwar aus dem Stand der Technik bereits bekannt
(siehe beispielsweise Ullmanns Encyklopädie der technischen Chemie, 5. Band - 1954, Verlag Urban & Schwarzenberg - München/Berlin, Stichwort "Celluloseäther", S.
175/176), Celluloseether zum Klären trüber Lösungen zu
verwenden - so wird Wein durch Zusatz einer wäßrigen
Lösung von Methylcellulose, die später durch Tannin
ausgefällt wird, von kolloidalen Trübungsstoffen befreit -, aber bei diesem Verfahren verbleibt der Celluloseether nicht in der behandelten Flüssigkeit, sondern
wird in eine unlösliche Form überführt und abfiltriert.
Im Gegensatz dazu wird im erfindungsgemäßen Verfahren
aber der Cellulose- oder Stärkeether der zu behandelnden Flüssigkeit zu einem geeigneten Zeitpunkt zugesetzt,
beispielsweise vor dem Abfüllen auf Flaschen, vor Beginn
des Gärprozesses oder vor Beginn des Eindickens, und
verbleibt dann in der Flüssigkeit.

Zu den zu behandelnden Flüssigkeiten zählen Weine,
Schaumweine und Traubensäfte, wobei unter diese Begriffsbestimmungen auch konzentrierte oder teilweise angegorene Formen der Flüssigkeiten fallen sollen, aber auch Traubenmost, Traubennektar, Traubenfruchtsaftgetränke, Sekt oder weinhaltige Getränke. Der Begriff "wasserlöslich" soll bedeuten, daß der Celluloseether sich in der Regel vollständig bereits in kaltem Wasser löst, aber auch noch bis zu maximal 5 Gew.-%, insbesondere bis zu maximal 2 Gew.-%, Rückstände aufweisen kann. Die Carboxyalkylgruppen umfassen solche mit Alkylresten von 1 bis 5 C-Atomen, insbesondere von 1 oder 2 C-Atomen, und werden im allgemeinen durch Veretherung der Polysaccharide Cellulose oder Stärke mit Halogenalkylcarbonsäuren mit Alkylresten von 1 bis 5 C-Atomen (bzw. in anderer Nomenklatur Halogenalkansäuren mit 2 bis 6 C-Atomen) im Alkalischen erzeugt. Zu den Carboxyalkylethern der Polysaccharide Cellulose und Stärke sollen auch solche gezählt werden (sogenannte Mischether), die nur überwiegend, d. h. zu mehr als 75 Gew.-%, Carboxyalkylgruppen als Substituenten tragen, im übrigen aber (zu weniger als 25 Gew.-%) andere Ethersubstituenten wie Alkyl- oder Hydroxyalkylgruppen. Es können grundsätzlich sowohl die freie Säureform als auch wasserlösliche Salze (wie Natrium-, Kalium- oder Ammoniumsalze) der Carboxyalkylether der Cellulose oder Stärke eingesetzt werden, bevorzugt werden die Salze im erfindungsgemäßen Verfahren eingesetzt. Von den Polysaccharidethern werden bevorzugt Celluloseether und insbesondere die Carboxymethylcellulose oder ihr Natriumsalz eingesetzt. Im allgemeinen können die Polysaccharidether über einen breiten Viskositätsbereich, beispielsweise von 5 mPa·s bis zu 50 000 mPa·s, eingesetzt werden, wenn jedoch die behandelten Flüssigkeiten insbesondere noch filtriert werden müssen, empfiehlt sich eher der Einsatz von niedriger viskosen Typen, bevorzugt im Bereich von 5 bis 500 mPa·s; die Viskosität wird dabei nach Höppler im Kugelfallviskosimeter bei 20 °C in 2%iger wäßriger Lösung bestimmt.

In bevorzugten Ausführungsformen des erfindungsgemäßen Verfahrens werden die Polysaccharidether in einer Menge von 0,001 bis 2 g, insbesondere von 0,005 bis 1 g, pro 1 zu behandelnder Flüssigkeit eingesetzt; sie werden im allgemeinen in wäßriger Lösung oder gelöst in der zu behandelnden Flüssigkeit eingesetzt.

Die im erfindungsgemäßen Verfahren verwendeten Polysaccharidether können ohne größeren apparativen und energetischen Aufwand den zu behandelnden Flüssigkeiten zu einem geeigneten Zeitpunkt zugesetzt werden und bewirken dort - wie auch aus den nachfolgenden Beispielen und Vergleichsbeispielen ersichtlich - eine Verhinderung der Weinsteinbildung. Die Größenordnung des Grades der Verhinderung liegt höher als bei anderen Polysaccharidderivaten und etwa bei der von Metaweinsäure, jedoch ist die Langzeitwirkung bei Zugabe der Polysaccharidether deutlich besser als bei Metaweinsäure.

Alle nachfolgenden Beispiele wurden mit dem gleichen Wein als repräsentativer zu behandelnder Flüssigkeit und unter gleichartigen Bedingungen durchgeführt, um untereinander vergleichbare Ergebnisse zu erhalten. Zur Ausscheidung des überschüssig im Wein vorhandenen

HOECHST AKTIENGESELLSCHAFT
KALLE Niederlassung der Hoechst AG

- 8 -

Weinsteins dient das sogenannte Minikontaktverfahren.
Der Verlauf der Kristallisation wird durch Messung der
Leitfähigkeit erfaßt und kann, bezogen auf die Meßdauer,
tabellarisch und/oder graphisch festgehalten werden.
Der Wein kann vor und nach Zugabe des Polysaccharidethers bzw. der Vergleichssubstanz auf seinen pH-Wert,
den titrierbaren Gehalt an insgesamt vorhandener Säure
("titrierbare Gesamtsäure"), Weinsäure und Kaliumionen
untersucht werden, wobei die bekannten Methoden der
Weinanalytik angewendet werden können (potentiometrische
pH-Wert-Bestimmung, titrierbare Gesamtsäure nach Henning/
Jakob "Untersuchungsmethoden für Wein und ähnliche Getränke", Verlag Eugen Ulmer - Stuttgart, 1973, Weinsäure
nach Rebelein, Kaliumionen mit Flammen-Spektralphotometer).

Das "Minikontaktverfahren" baut auf dem großtechnisch
angewendeten Kontaktverfahren auf und wird wie folgt
durchgeführt (Müller und Würdig, Das Minikontaktverfahren - ein einfacher Test zur Prüfung auf Weinsteinstabilität, in Die Weinwirtschaft 31, S. 858, 1978):
250 bis 400 ml Wein werden in einem Dreihalskolben auf
6 °C unter Rühren gekühlt (thermostatgeregeltes Wasserbad). Der Kolben enthält ein Kontrollthermometer und
eine Leitfähigkeitsmeßelektrode. Wenn der Wein die Versuchstemperatur erreicht hat, wird seine Leitfähigkeit
bei ausgeschaltetem Rührwerk bestimmt. Zum "Animpfen"
werden als Kontaktweinstein 4 g/l Kaliumhydrogentartrat
unter Rühren eingebracht. Anschließend werden dann regelmäßig Leitfähigkeitsmessungen vorgenommen. Zeigen sich keine oder nur sehr geringe Leitfähigkeitsänderungen, so kann das Meßverfahren in der Regel bereits nach 1 bis 2 h abgebrochen werden, sonst wird die Messung bis zu einer Dauer von etwa 4 h ausgedehnt. Nach Beendigung der Messung wird der Wein über eine vorgekühlte Filtervorrichtung abfiltriert und steht dann für weitere Analysen zur Verfügung. Der gegebenenfalls abgetrennte Weinstein wird bei etwa 60 °C getrocknet, leicht zermahlen und kann für eventuelle weitere Einsätze erneut als Kontaktweinstein verwendet werden.

Die zuzusetzenden Verbindungen werden bei 50 °C in einem Viertel der gesamten Weinmenge durch Rühren gelöst, und nach Zugabe der restlichen Flüssigkeitsmenge wird der Wein filtriert, so daß für die Meßreihen eine klare Lösung vorliegt. Als Versuchswein wurde ein trockener Rheingauer Riesling (QbA-Stufe) des Jahres 1981 (Ausgangswein 1) gewählt, der einen niedrigen Eigenkolloidgehalt, einen relativ geringen Zucker- und relativ hohen Alkoholgehalt aufwies. Der Wein wurde mit 1,15 g Kaliumhydrogentartrat pro 1 versetzt (Wein A), da er ohne diesen Zusatz nach Zugabe von Kontaktweinstein "weinsteinstabil" bliebe; er wird durch diesen Zusatz "weinsteininstabil".

Vergleichsbeispiel V1
Von 300 ml Wein A mit einer Temperatur von 6 °C wird die Grundleitfähigkeit gemessen, danach erfolgen die Zugabe des Kontaktweinsteins und der Beginn der Zeit- und Leitfähigkeitsmessung.

HOECHST AKTIENGESELLSCHAFT
KALLE Niederlassung der Hoechst AG

- 10 -

Tabelle I

| Kontaktdauer (min) | Leitfähigkeit (µS) | Leitfähigkeits-abnahme (µS) |
|---|---|---|
| 0 | 1470 | - |
| 20 | 1420 | 50 |
| 40 | 1400 | 70 |
| 65 | 1390 | 85 |
| 90 | 1375 | 95 |
| 130 | 1370 | 105 |
| über Nacht | 1345 | 125 |

Vergleichsbeispiel V2

Es wird nach V1 verfahren, aber als Kontaktweinstein der abgetrennte Weinstein aus V1 eingesetzt.

Tabelle II

| Kontaktdauer (min) | Leitfähigkeit (µS) | Leitfähigkeits-abnahme (µS) |
|---|---|---|
| 0 | 1470 | - |
| 30 | 1420 | 50 |
| 46 | 1405 | 65 |
| 60 | 1395 | 75 |
| 90 | 1385 | 85 |
| 105 | 1380 | 90 |
| 120 | 1375 | 95 |

Bei nochmaliger Verwendung des abgetrennten Weinsteins tritt gegenüber der Zugabe von reinem Kaliumhydrogentartrat eine leichte Hemmung der Weinsteinausscheidung auf.

Vergleichsbeispiel V3

Es wird nach V1 verfahren, aber vor der Zugabe von Kontaktweinstein werden 100 mg/l an Metaweinsäure zugesetzt.

Tabelle III

| Kontaktdauer (min) | Leitfähigkeit (µS) | Leitfähigkeits-abnahme (µS) |
|---|---|---|
| 0 | 1520 | – |
| 33 | 1520 | 0 |
| 44 | 1520 | 0 |
| 61 | 1520 | 0 |
| 90 | 1520 | 0 |

Beispiele 1 und 2

Es wird nach V1 verfahren, aber vor der Zugabe von Kontaktweinstein werden 250 (Beispiel 1) bzw. 100 mg/l (Beispiel 2) an einer wasserlöslichen Natriumcarboxymethylcellulose (NaCMC) einer mittleren Viskosität von etwa 5 000 mPa·s zugesetzt. In beiden Beispielen kommt es auch nach 41 oder 124 min Kontaktdauer zu keiner Abnahme der Leitfähigkeit.

HOECHST AKTIENGESELLSCHAFT
KALLE Niederlassung der Hoechst AG

- 12 -

Beispiele 3 bis 5

Es wird nach Beispiel 2 verfahren, aber mit Typen an wasserlöslicher NaCMC einer mittleren Viskosität von etwa 30, 300 und 600 mPa·s (beispielsweise [R]Tylopur-C-Typen der Hoechst AG). In allen Beispielen kommt es ebenfalls zu keiner Abnahme der Leitfähigkeit, die Filtrationseigenschaften der Weine mit Zusatz gemäß der Beispiele 3 bis 5 sind relativ besser als die der Beispiele 1 und 2.

Beispiel 6

Es wird nach Beispiel 3 verfahren, aber nur mit Zugabe von 25 mg/l, wodurch es ebenfalls zu keiner Abnahme der Leitfähigkeit kommt.

Vergleichsbeispiel V4

Es wird nach V1 verfahren, aber vor der Zugabe von Kontaktweinstein werden 250 mg/l an wasserlöslicher Stärke zugesetzt.

Tabelle IV

| Kontaktdauer (min) | Leitfähigkeit (µS) | Leitfähigkeits-abnahme (µS) |
|---|---|---|
| 0 | 1520 | - |
| 46 | 1440 | 80 |
| 132 | 1410 | 110 |

0140044

- 13 -

Bei den nachfolgenden Vergleichsbeispielen wird von einem leicht veränderten Wein (Ausgangswein 2) ausgegangen, der gegenüber dem Ausgangswein 1 bezeichnungsunschädlich verschnitten ist. Er wird mit 0,6 g Kaliumhydrogentartrat pro 1 "weinsteininstabilisiert" (Wein B).

## Vergleichsbeispiel V5

Es wird nach V1 verfahren, aber mit Wein B.

### Tabelle V

| Kontaktdauer (min) | Leitfähigkeit ($\mu$S) | Leitfähigkeitsabnahme ($\mu$S) |
|---|---|---|
| 0 | 1550 | – |
| 28 | 1500 | 50 |
| 40 | 1490 | 60 |
| 65 | 1475 | 75 |
| 83 | 1465 | 85 |
| 104 | 1460 | 90 |
| 126 | 1455 | 95 |
| 195 | 1445 | 105 |
| 236 | 1445 | 105 |
| über Nacht | 1420 | 130 |

## Vergleichsbeispiel V6

Es wird nach V1 verfahren, aber als Kontaktweinstein der abgetrennte Weinstein aus V5 eingesetzt.

HOECHST AKTIENGESELLSCHAFT
KALLE Niederlassung der Hoechst AG

- 14 -

Tabelle VI

| Kontaktdauer (min) | Leitfähigkeit (µS) | Leitfähigkeits-abnahme (µS) |
|---|---|---|
| 0 | 1550 | - |
| 38 | 1500 | 50 |
| 58 | 1495 | 55 |
| 72 | 1485 | 65 |
| 98 | 1475 | 75 |
| 124 | 1465 | 85 |
| 184 | 1455 | 95 |
| 236 | 1450 | 100 |

Vergleichsbeispiel V7

Es wird nach V5 verfahren, aber vor der Zugabe von Kontaktweinstein werden 250 mg/l an Gummi arabicum zugesetzt.

Tabelle VII

| Kontaktdauer (min) | Leitfähigkeit (µS) | Leitfähigkeits-abnahme (µS) |
|---|---|---|
| 0 | 1550 | - |
| 25 | 1510 | 40 |
| 83 | 1480 | 70 |

Vergleichsbeispiel V8

Es wird nach V5 verfahren, aber vor der Zugabe von Kontaktweinstein werden 250 mg/l an Pektin zugesetzt.

### Tabelle VIII

| Kontaktdauer (min) | Leitfähigkeit (µS) | Leitfähigkeits- abnahme (µS) |
|---|---|---|
| 0 | 1550 | - |
| 75 | 1500 | 50 |
| 103 | 1490 | 60 |
| 138 | 1480 | 70 |
| 234 | 1465 | 85 |

Vergleichsbeispiel V9

Es wird nach V5 verfahren, aber vor der Zugabe von Kontaktweinstein werden 250 mg/l an Pepton zugesetzt.

### Tabelle IX

| Kontaktdauer (min) | Leitfähigkeit (µS) | Leitfähigkeits- abnahme (µS) |
|---|---|---|
| 0 | 1550 | - |
| 27 | 1540 | 10 |
| 68 | 1530 | 20 |
| 92 | 1530 | 20 |
| 144 | 1525 | 25 |
| 160 | 1525 | 25 |

HOECHST AKTIENGESELLSCHAFT
KALLE Niederlassung der Hoechst AG

- 16 -

Vergleichsbeispiel V10

Es wird nach V5 verfahren, aber vor der Zugabe von Kontaktweinstein werden 250 mg/l an Tannin zugesetzt.

Tabelle X

| Kontaktdauer (min) | Leitfähigkeit (µS) | Leitfähigkeits-abnahme (µS) |
|---|---|---|
| 0 | 1550 | - |
| 29 | 1530 | 20 |
| 46 | 1530 | 20 |

## Tabelle XI

Veränderung der Analysenwerte vor und nach der Weinsteinstabilisierung

| Beispiel | pH-Wert | Gesamtsäure (g/l) | Weinsäure (g/l) | K⁺-Ionen (mg/l) |
|---|---|---|---|---|
| — *) | 3,4 | 6,9 | 1,11 | 1025 |
| — **) | 3,4 | 7,4 | 1,90 | 1300 |
| V1 | 3,4 | 7,05 | 1,40 | 1125 |
| V2 | 3,4 | 7,05 | 1,42 | 1175 |
| V3 | 3,3 | 8,3 | 2,18 | 1250 |
| 1 | 3,39 | 7,2 | 1,90 | 1225 |
| 2 | 3,38 | 7,3 | 1,88 | 1225 |
| V4 | 3,36 | 7,6 | 1,90 | 1200 |
| — +) | 3,35 | 8,0 | 1,44 | 1075 |
| — ++) | 3,35 | 8,2 | 2,16 | 1225 |
| V5 | 3,34 | 7,5 | 1,34 | 1075 |
| V6 | 3,38 | 7,6 | 1,38 | 1075 |
| V7 | 3,36 | 7,5 | 1,42 | 1075 |
| V8 | 3,35 | 7,5 | 1,42 | 1000 |
| V9 | 3,36 | 7,75 | 1,73 | 1125 |
| V10 | 3,36 | 7,5 | 1,80 | 1225 |

*) Ausgangswein 1    +) Ausgangswein 2
**) Wein A    ++) Wein B

0140044

HOECHST AKTIENGESELLSCHAFT
KALLE Niederlassung der Hoechst AG

83/K059      - 18 -      4. September 1984
WLK-Dr.I.-wf

<u>Patentansprüche</u>

1 Verfahren zur Verhinderung der Weinsteinbildung in Weinen, Schaumweinen und Traubensäften durch Zugabe von Polysacchariden oder Polysaccharidderivaten zu den zu behandelnden Flüssigkeiten, dadurch gekennzeichnet, daß als Polysaccharidderivat ein wasserlöslicher Carboxyalkylether der Cellulose oder Stärke oder eines ihrer wasserlöslichen Salze eingesetzt wird.

2 Verfahren nach Anspruch 1, dadurch gekennzeichnet, daß der Carboxyalkylether eine Alkylgruppe mit 1 bis 5 C-Atomen aufweist.

3 Verfahren nach Anspruch 1 oder 2, dadurch gekennzeichnet, daß der Carboxyalkylether eine Alkylgruppe mit 1 oder 2 C-Atomen aufweist.

4 Verfahren nach einem der Ansprüche 1 bis 3, dadurch gekennzeichnet, daß das Polysaccharidderivat ein Celluloseether ist.

5 Verfahren nach Anspruch 4, dadurch gekennzeichnet, daß als Celluloseether eine wasserlösliche Carboxymethylcellulose oder ihr Natriumsalz eingesetzt wird.

6 Verfahren nach einem der Ansprüche 1 bis 5, dadurch gekennzeichnet, daß das Polysaccharidderivat in einer

HOECHST AKTIENGESELLSCHAFT
KALLE Niederlassung der Hoechst AG

- 19 -

Menge von 0,001 bis 2 g pro l zu behandelnder Flüssigkeit eingesetzt wird.

7 Verfahren nach einem der Ansprüche 1 bis 6, dadurch gekennzeichnet, daß das Polysaccharidderivat in einer Menge von 0,005 bis 1 g pro l zu behandelnder Flüssigkeit eingesetzt wird.

-.-.-